# EUROPEAN PATENT SPECIFICATION

(11) **EP 4 442 025 B1**
(45) Date of publication and mention of the grant of the patent: **18.06.2025**
(21) Application number: 22802637.3
(22) Date of filing: 19.10.2022
(51) Int. Cl.: H04W 24/02, G06F 9/50

(54) **APPLICATION MANAGEMENT IN MOBILE COMMUNICATION NETWORKS**
ANWENDUNGSVERWALTUNG IN MOBILKOMMUNIKATIONSNETZEN
GESTION D'APPLICATIONS DANS DES RÉSEAUX DE COMMUNICATION MOBILES

(30) Priority: 29.11.2021 IT 202100030140
(43) Date of publication of application: 09.10.2024
(73) Proprietor: Telecom Italia S.p.A., 20123 Milano (IT)
(72) Inventor: DELL AERA, Gian Michele, 10148 TORINO (IT); BULDORINI, Andrea, 10148 TORINO (IT); GUARINO, Enrico, 10148 TORINO (IT)
(74) Representative: Maccalli, Marco
(86) International application number: PCT/EP2022/079117
(87) International publication number: WO 2023/094079

(56) References cited:
- US-A1- 2009 248 920
- US-A1- 2020 329 381
- US-A1- 2021 234 648

## Description

### Background of the present invention

### Field of the present invention

The present invention generally relates to the communication network field. More particularly, the present invention relates to a mobile communication network having Self-Organizing Network ("SON") capabilities.

### Overview of the related art

Modern mobile communication networks, such as 4G, 5G mobile communication networks, are capable of implementing Self-Organizing Network ("SON") capabilities for the automatic configuration and management of network nodes of the mobile communication network.

Among the known architectures for implementing SON capabilities in a mobile communication network, the one described in the White Paper "O-RAN Use Cases and Deployment Scenarios, Towards Open and Smart RAN", February 2020, by the O-RAN Alliance (https://static1.squarespace.com/static/5ad774cce74940d7115044b0/t/5e95a0a306c6ab2d1cbca4d3/ 1586864301196/O-RAN+Use+Cases+and+Deployment+Scenarios+Whitepaper+February+2020.pdf), provides for:
- a Service Manager Orchestrator (SMO) configured to handle the network service and configurations, by generating requests of specific policies/services for the management of the network nodes;
- one or more near Real Time Radio Intelligent Controllers ("nRT-RIC", hereinafter referred to as "controller platforms") configured to collect information from the network nodes and, exploiting Machine Learning (ML) and/or Artificial Intelligence (AI) engines, control the network nodes in order to carry out tasks on the network nodes exploiting the policies requested by the SMO through the generated requests.

Each controller platform is a platform node of the mobile communication network where multiple applications (hereinafter referred to as "xAPPs") can run concurrently, each one for carrying out a corresponding task. Through the ML and/or AI engines, the controller platform can efficiently control the execution of the xAPPs for performing a variety of tasks, regarding for example (the list being not exhaustive):
- The monitoring of potentials network faults;
- The handling of Quality of Experience (QoE);
- The handling of Quality of Service (QoS);
- The handling of network traffic balance;
- The handling of network interference.

The controller platform is interfaced with the SMO and with (*e.g.,* a respective set of) the network nodes through proper interfaces.

A first interface, referred to as "A1 interface" between the SMO and the controller platform is configured to be exploited by the SMO for forwarding requests regarding mobile communication networks operation policies to the controller platform.

A second interface, referred to as "E2 interface" between the controller platform and (*e.g.,* the respective set of) the network nodes, is configured to be used for receiving information collected from the network nodes and for providing control messages for controlling (*e.g.*, the respective set of) the network nodes according to the policies requested by the SMO.

A third interface, referred to as "O1 interface" between the SMO and the controller platform is configured to be used to monitor the xAPPs lifecycles and the controller platform, and to configure the controller platform.

US patent application US2021029580 discloses various embodiments providing for flexible buffer management that optimize congestion control using radio access network (RAN) intelligent controller. According to some embodiments, a system can comprise monitoring a performance of a communication traffic flow using a group of buffer parameters of a network node device of a wireless network, wherein the performance is measured according to a defined performance criterion, receiving performance values for requested performance characteristics of the performance of the communication traffic flow via a first interface, and based on an adjustment value of the performance values, adjusting, via a second interface, a buffer parameter of the group of buffer parameters.

PCT application WO 2021/048831 discloses a method performed by a non-real time radio access network intelligent controller (NonRT-RIC) network node that comprises obtaining data for improving radio resource management (RRM) of a radio access network (RAN) and building an A1 interface message comprising one or more enrichment information (EI) elements based on the obtained data. Each of the one or more EI elements comprises an identifier of one or more wireless devices, a type indicator indicating a type of enrichment data included in the EI element, and the enrichment data. The method further comprises transmitting the AI interface message to a near real time radio access network intelligent controller (NearRT-RIC).

US patent 10791467 discloses a framework of abstraction of new and existing 5G radios that can enhance capabilities of new and existing micro radios and other short range radio technologies to enable intelligent service delivery, dynamic access learning capability, and network slicing over 5G access networks. Enhancing layer communication for both control and user plane can be tunneled through the hosting layer and exploit a common transport provided by the hosting layer. The tunneling through the hosting layer can also enable the enhance capabilities to access the same radio management functions and can be orchestrated by the same core function. The framework for abstraction of the resources can be used to provide dynamic sharing of the resources and then be divided amongst different carriers.

US 2020/329381 A1 discloses systems and methods for orchestration and configuration of end-to-end network slices across a 3GPP core network and ORAN. The network includes a NSMF that receives an AllocateNSI operation with attributes to allocate an NSI. The AllocateNSI operation includes an attributeListIn parameter that specifies network slice properties in a ServiceProfile to be supported by the NSI. The NSMF determines that a new NSI is to be created rather than using an existing NSI and that the new NSI is to contain a NSSI (RAN) and a NSSI (CN). The NSMF communicates with a NSSMF (RAN) and NSSMF (CN) to create the new NSI. The new NSI includes an O-CU-CP, O-CU-UP and O-DU VNFs, and an O-RU PNF for the NSSI (RAN), and UPF, AMF, and SMF VNFs for the NSSI (CN).

US 2009/248920 A1 discloses a flexible and reconfigurable digital system (for example, a wireless modem) that includes a set of sub-circuits. Each sub-circuit includes a task manager and an amount of configurable hardware circuitry for performing a type of operation on a data stream. The task manager of a sub-circuit can configure and control the configurable hardware of the sub-circuit. A central processor configures and orchestrates operation of the sub-circuits by maintaining a set of task lists in a tightly coupled memory. Each task list includes task instructions for a corresponding sub-circuit. The task manager of a sub-circuit reads task instructions from its task list and controls its associated hardware circuitry as directed by the instructions. A timestamp task instruction and a push task instruction and the task list architecture allow modem sub-circuits to be easily reconfigured to operate in accordance with either a first air interface standard or a second air interface standard.

US 2021/234648 A1 discloses a method and an apparatus for providing dynamic synchronization of radio resources in a radio access network (RAN) in a wireless communication system. The RAN has a type one network scheduler and a type two network scheduler. The method includes receiving a first physical resource block (PRB) assignment configuration from the type one network scheduler and the type two network scheduler. The first physical resource block (PRB) assignment configuration is received by a first controller. Further, the method includes determining a second PRB assignment configuration using the first PRB assignment configuration, wherein the second PRB assignment configuration is determined by the first controller. Furthermore, the method includes allocating the second PRB assignment configuration at the synchronization time (s) to the type one network scheduler and the type two network scheduler by the first controller.

### Summary of the present invention

Applicant has observed that none of the solutions known in the art is capable of managing the lifecycle of the xAPPs and the controller platform in an efficient way. Indeed, the solutions known in the art cannot efficiently manage the concurrent execution of a large number of xAPPs for carrying out different tasks, and especially the routing of messages and data among the SMO, the controller platform(s) and the network nodes through the various interfaces.

In view of the above, Applicant has devised a solution to efficiently manage the lifecycle of the xAPPs and the controller platform.

One or more aspects of the present invention are set out in the independent claims, with advantageous features of the same invention that are indicated in the dependent claims.

An aspect of the present invention relates to a mobile communication network.

The mobile communication network comprises a plurality of radio network nodes.

The mobile communication network comprises a service manager orchestrator module configured to handle network service and operation and configuration of the radio network nodes by generating requests RQ requesting policies for the management of said radio network nodes.

The mobile communication network further comprise a controller platform configured to manage the radio network nodes by controlling the execution of applications for carrying out tasks on the radio network nodes according to policies requested by the service manager orchestrator module through the requests RQ.

The controller platform comprises a database module configured to store configuration data comprising data about the configuration and status of said tasks and of said applications.

The controller platform further comprises a data buffer module configured to manage data communication among the applications, the service manager orchestrator module and the radio network nodes.

The controller platform further comprises a control system configured to manage the lifecycle of the applications by controlling the data buffer based on said configuration data.

In this way, even if a plurality of different applications are concurrently running, messages and data can be efficiently routed among the service manager orchestrator module, the controller platform and the network nodes, through the data buffer.

According to an embodiment of the present invention, said configuration data comprises, for each one of said tasks, at least one among:
- a task type parameter indicative of a purpose of said task;
- a task priority parameter indicative of a priority of said task (which according to the claimed invention must always be included);
- an application list listing the applications involved for carrying out said task.

According to an embodiment of the present invention, said configuration data comprises, for each one of said applications, at least one among:
- an application identification parameter identifying the application;
- an application policy parameter identifying policies supported by the application;
- an application status parameter identifying a status of the application.

According to an embodiment of the present invention, said configuration data further comprises data about the configuration and status of the controller platform.

According to an embodiment of the present invention, said configuration data comprises at least one between:
- a controller platform identification parameter identifying the controller platform;
- a controller platform status parameter identifying a status of the controller platform.

According to an embodiment of the present invention, said control system comprises a manager module configured to receive from the service manager orchestrator module a request to set a policy for the operation of at least one application involved in the carrying out of a task.

According to an embodiment of the present invention, said manager module is further configured to provide said request to the data buffer module.

According to an embodiment of the present invention, said manager module is further configured to cause said request to be forwarded to said at least one application through the data buffer module by controlling said data buffer module based on said configuration data.

According to an embodiment of the present invention, said manager module is configured to forward said request to said at least one application by controlling said data buffer module based at least on the application policy parameter corresponding to said at least one application.

According to the present invention, each application is configured to generate a node control message to be forwarded to selected radio network nodes so as to carry out a task on said selected network nodes.

According to the present invention, each application is configured to provide said control message to the data buffer module.

According to the present invention, said control system comprises a management and conflict module configured to forward said node control message to the selected radio network nodes through the data buffer module by controlling said data buffer module based on said configuration data.

According to the present invention, the management and conflict module is configured to control the data buffer module so that, when at least two applications are concurrently providing node control messages to the data buffer module, the node control messages are actually forwarded to the selected radio network nodes based on a comparison of the task priority parameters of the tasks involving said at least two applications.

According to an embodiment of the present invention, the controller platform is configured to control the data buffer module to collect from the radio network nodes information data regarding the status of the radio network nodes and to make said collected information data available to the applications that are currently running.

According to an embodiment of the present invention, the service manager orchestrator module comprises an orchestrator module configured to update/modify said configuration data for reconfiguring the controller platform.

According to an embodiment of the present invention, said tasks comprises at least one among:
- a task directed to monitoring potentials network faults;
- a task directed to handle Quality of Experience;
- a task directed to handle Quality of Service;
- a task directed to handle network traffic balance;
- a task directed to handle network interference.

According to an embodiment of the present invention, said mobile communication network is a 4G or a 5G mobile communication network configured to implement Self-Organizing Network capabilities.

Another aspect of the present invention relates to a method for managing a mobile communication network including a plurality of radio network nodes.

The method comprises handling network service and operation and configuration of the radio network nodes by generating requests requesting policies for the management of said radio network nodes.

The method further comprises managing the radio network nodes by controlling the execution of applications for carrying out tasks on the radio network nodes according to policies requested through the requests.

Said managing the radio network nodes comprises storing configuration data comprising data about the configuration and status of said tasks and of said applications.

Said managing the radio network nodes further comprises managing, through data buffering, data communication between the applications and the radio network nodes, and communication of the requests to the applications,
Said managing the radio network nodes further comprises managing the lifecycle of the applications by controlling the data buffering based on said configuration data.

### Brief description of the drawings

These and other features and advantages of the present invention will appear more clearly by reading the following detailed description of exemplary and non-limitative embodiments thereof. For its better intelligibility, the following description should be read making reference to the attached drawing, wherein:
**Figure 1** is a schematic representation of a mobile communication network according to an embodiment of the present invention;
**Figure 2** depicts a flow chart showing in terms of functional blocks a lifecycle of applications managed by the controller platform of the mobile communication network of **Figure 1** according to an embodiment of the present invention.
**Figure 3** schematically illustrates in greater detail operation phases carried out by the SMO controller module, by the orchestrator module, and by the controller platform of the mobile communication network of **Figure 1** according to an exemplary embodiment of the present invention.

### Detailed description of exemplary and non-limitative embodiments of the present invention

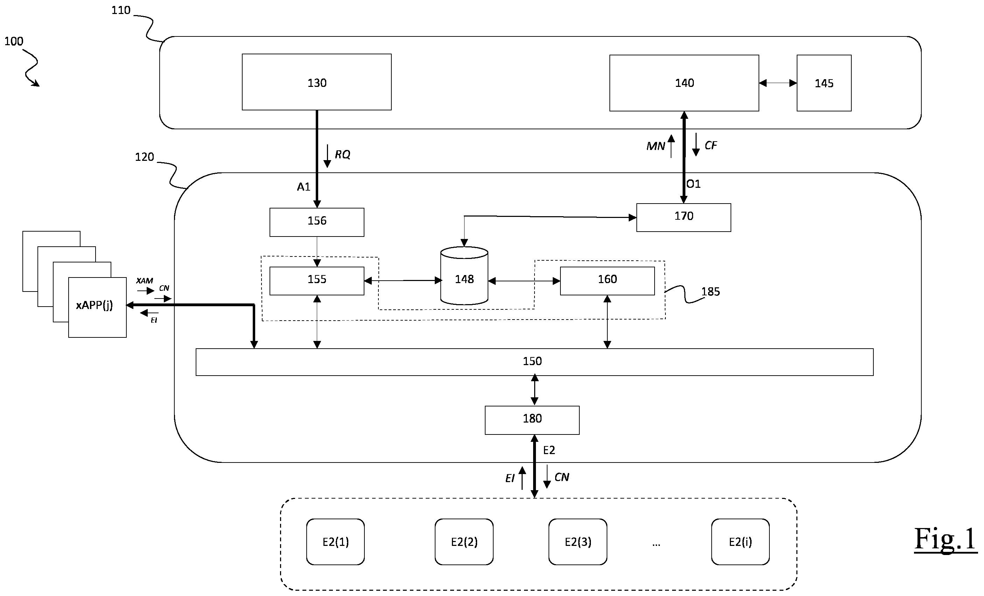

With reference to the drawing, **Figure 1** is a schematic representation of a mobile communication network **100** according to an embodiment of the present invention.

It has to be appreciated that in the present description, the terms "nodes", "module", "platform" and "unit" are intended to emphasize functional (rather than implementation) aspects thereof. Each node/module/platform/unit of the mobile communication network **100** which will be described herein may be implemented by software, hardware, and/or a combination thereof. Moreover, some of the nodes, modules, platforms and units may also reflect, at least conceptually, physical structures of portions of the mobile communication network **100.**

The mobile communication network **100** comprises a plurality of network nodes **E2(i)** (i = 1, 2, ...), *e.g.*, radio network nodes such as eNodeB and/or gNodeB base stations.

According to an embodiment of the present invention, the mobile communication network **100** is a 4G or a 5G mobile communication network (however, the concepts of the inventions can be applied to any other mobile communication network, such as based on future development of 4G/5G) configured to implement SON capabilities, and its architecture is compliant with the O-RAN alliance architecture described in the already mentioned White Paper "O-RAN Use Cases and Deployment Scenarios, Towards Open and Smart RAN".

According to an embodiment of the present invention, the mobile communication network **100** comprises a Service Manager Orchestrator (SMO) module **110** configured to handle the network service and the operation and configuration of the network nodes **E2(i)** by generating request *RQ* messages requesting specific policies/services for the management of said network nodes **E2(i).**

According to an embodiment of the present invention, the mobile communication network **100** further comprises at least one controller platform **120** (only one illustrated in **Figure 1**) configured to collect information data *EI* from the network nodes **E2(i)** and manage the network nodes **E2(i)** by controlling the execution of applications **xAPP(j)** for carrying out specific tasks *TSK(k)* on the network nodes **E2(i)** according to the policies requested by the SMO module **110** through the request messages *RQ*.

According to an embodiment of the present invention, the controller platform **120** is interfaced with the SMO module **110** through an A1 interface (identified in figure with reference **A1**) for receiving the request messages *RQ* from the SMO **110.**

According to an embodiment of the present invention, the controller platform **120** is further interfaced with the SMO module **110** through an O1 interface (identified in figure with reference **O1**) for:
- receiving configuration messages *CF* from the SMO **110** directed to the (re)configuration of the controller platform **120** itself;
- sending monitoring messages *MN* to the **SMO** 110 providing information about the lifecycles of the applications **xAPP(j)** and about the controller platform **120.**

According to an embodiment of the present invention, the controller platform **120** is interfaced with the network nodes **E2(i)** through an E2 interface (identified in figure with reference **E2**) for receiving information data *EI* from the network nodes **E2(i)** regarding the status of the network nodes **E2(i),** and for providing to the latter node control messages *CN* for carrying out tasks *TSK(k)* implemented by applications **xAPP(j)** running according to the policies requested by the SMO module **110.**

In the embodiment of the invention illustrated in **Figure 1****,** only one controller platform **120** is provided, directed to interact with all the network nodes **E2(i)** of the mobile communication network **100.** However, similar considerations apply in case a plurality of controller platforms **120** are provided, each one configured to collect information from and to send control messages to a corresponding set of network nodes **E2(i).** System redundancy can be also possible, with two or more controller platforms **120** that are directed to interact with same network nodes **E2(i).**

According to an embodiment of the present invention, the SMO module **110** comprises a non-real time controller module **130** (hereinafter, "SMO controller module") configured to generate the request messages *RQ* indicative of requests of specific policies/services for the management of selected network nodes **E2(i).**

According to an embodiment of the present invention, the SMO module **110** further comprises a network function orchestrator module **140** (hereinafter, "orchestrator module") configured to generate the configuration messages *CF* for the (re)configuration of the controller platform **120.** For example, the configuration messages *CF* can be generated by a user of the orchestrator module **140,** for example through a corresponding Graphic User Interface (GUI) module **145.** According to an embodiment of the present invention, the orchestrator module **140** is further configured to collect from the controller platform **120** the monitoring messages *MN* providing information about the lifecycles of the applications **xAPP(j)** and about the controller platform **120.** According to an embodiment of the present invention, the monitoring messages *MN* can be inspected by a user of the orchestrator module **140** through the GUI module **145.**

According to an embodiment of the present invention, the controller platform **120** comprises a database module **148** configured to store configuration data *CD* of the controller platform **120.** As will be described in detail in the following, the configuration data *CD* comprise data regarding the general configuration and status of the controller platform **120,** as well as data about the configuration and status of tasks *TSK(k)* carried out by applications **xAPP(j)** and of the applications **xAPP(j).** According to an embodiment of the present invention, the configuration data *CD* may be updated/modified by the network function orchestrator module **140** according to the configuration messages *CF* and/or by the SMO controller module **130** according to the request messages *RQ*, and/or through application management messages *XAM* sent by the applications **xAPP(j)** and comprising information about the applications **xAPP(j)** (for example, name, software version, topic, status).

According to an embodiment of the present invention, the controller platform **120** comprises a data buffer module **150** operating as a messaging infrastructure for routing messages among the applications **xAPP(j),** the SMO module **110** and the network nodes **E2(i),** as will be described in greater detail in the following.

According to an embodiment of the present invention, the data buffer module **150** is arranged to provide a low-latency message (and data) delivery service among internal endpoints of the controller platform **120.**

According to an embodiment of the present invention, the data buffer module **150** supports discovery of endpoints and registration of discovered endpoints. According to an embodiment of the present invention, the data buffer module **150** is also configured to remove registered endpoints.

According to an embodiment of the present invention, messages and data routing by the data buffer module **150** is managed by corresponding Application Programming Interfaces (APIs), allowing multiple messaging modes, such as a point-to-point messaging mode (*e.g.,* for communication among endpoints of the data buffer module **150**) and a publish/subscribe messaging mode (*e.g.,* for sending information data *EI* collected from network nodes **E2(i)** to multiple applications **xAPP(j)).**

According to an embodiment of the present invention, the data buffer module **150** is configured to support message robustness to avoid data loss during an outage/restart of the data buffer module **150** or to release resources from the data buffer module **150** once a message is outdated.

According to an embodiment of the present invention, the controller platform **120** comprises an A1 manager module **155** coupled to the interface **A1** through an A1 termination module **156** for receiving the request messages *RQ* and coupled to the data buffer module **150** for accordingly forward the received request messages *RQ* to selected applications **xAPP(j)** through the data buffer module **150** based on the configuration data *CD* stored in the database module **148,** as will be described in greater detail in the following.

As will be described in the following, according to an embodiment of the present invention, the A1 manager module **155** is also configured to update/modify the configuration data *CD* stored in the database module **148** through the request messages *RQ* sent by the SMO controller module **130.**

According to an embodiment of the present invention, the controller platform **120** further comprises a management and conflict module **160** coupled to the data buffer module **150** and to the database module **148** and configured to receive the application management messages *XAM* from the applications **xAPP(j)** through the data buffer module **150,** and use them to further update/modify the configuration data *CD* stored in the database module **148.**

According to an embodiment of the present invention, the applications **xAPP(j)** are configured to exploit information obtained by the information data *EI* and generate node control messages *CN* to be forwarded to selected network nodes **E2(i)** so as to carry out specific tasks *TSK(k)* on said selected network nodes **E2(i)** by running applications **xAPP(j)** according to the policies requested by the SMO module **110** through the request messages *RQ*. As will be described in detail in the following, the forwarding of the node control messages *CN* to the correct selected network nodes **E2(i),** as well as the management of possible conflicts among node control messages *CN* generated by concurrently running applications **xAPP(j)** is carried out through the data buffer module **150** under the control of the management and conflict module **160** based on the configuration data *CD* stored in the database module **148.**

According to an embodiment of the present invention, the controller platform **120** further comprises a configuration server module **170** coupled between the interface **O1** and the database module **148.**

According to an embodiment of the present invention, the configuration server module **170** is configured to receive the configuration messages *CF* from the orchestrator module **140** and accordingly update/modify the configuration data *CD* stored in the database module **148.**

According to an embodiment of the present invention, the configuration server **170** is also configured to inspect the database module **148** when the configuration data *CD* stored therein is modified, so as to assess the modifications on the stored configuration data *CD.* For example, according to an embodiment of the present invention, the configuration server **170** is configured to store an image of the content of the database module **148,** that is updated when modifications on the configuration data *CD* are assessed.

According to an embodiment of the present invention, a user of the orchestrator module **140** may request the configuration server **170** to send information about the status of applications **xAPP(j)** and/or about the controller platform **120** through the GUI module **145.** In response to said request, the configuration server **170** checks the stored image of the content of the database module **148,** and accordingly generates and sends to the orchestrator module **140** monitoring messages *MN* providing the requested information about the status of applications **xAPP(j)** and/or about the controller platform **120.**

According to an embodiment of the present invention, the data buffer module **150** is coupled to the network nodes **E2(i)** through a E2 termination module **180** for forwarding the node control messages *CN* generated by the applications **xAPP(j)** to the selected network nodes **E2(i)** and for providing information data *EI* collected from the network nodes **E2(i)** to the applications **xAPP(j)** under the control of the management and conflict module **160** by exploiting the configuration data *CD* stored in the database module **148.**

In view of the above, the controller platform **120** according to the embodiments of the invention is advantageously provided with a control system **185,** comprising the A1 manager module **155** and the management and conflict module **160,** adapted to effectively manage the lifecycle of the applications **xAPP(j)** by efficiently controlling the data buffer module **150.** For example, as will be described in greater detail in the following, the control system **185** according to embodiments of the present invention is configured to efficiently manage:
- the forwarding of policies (requested through the request messages *RQ*) to selected applications **xAPP(j)** through an efficient control of the data buffer module **150** implemented by the A1 manager module **155** exploiting the configuration data *CD* stored in the database module **148,** and
- the forwarding of node control messages *CN* generated by specific applications **xAPP(j)** to selected network nodes **E2(i)** through an efficient control of the data buffer module **150** implemented by the management and conflict module **160** exploiting the configuration data *CD* stored in the database module **148.**

As previously mentioned, according to an embodiment of the present invention, the configuration data *CD* stored in the database module **148** comprises a list of data/parameters about the configuration and management of the controller platform **120,** and about the configuration and status of tasks *TSK(k)* carried out by the applications **xAPP(j)** and of the applications **xAPP(j)** themselves.

According to an embodiment of the present invention, the configuration data *CD* comprise a parameter *Controller_ID* identifying the controller platform **120.** The parameter *Controller_ID* is particularly useful in case the mobile communication network **100** comprises a plurality of different controller platforms **120,** such as for example a first controller platform **120** for the management of a first group of 4G network nodes **E2(i),** a second controller platform **120** for the management of a second group of 4G network nodes **E2(i),** a third controller platform **120** for the management of a group of 5G network nodes **E2(i),** a fourth controller platform **120** specifically configured for the management of radio control events only, and so on.

According to an embodiment of the present invention, the configuration data *CD* comprise a parameter *Instructive_msg* used to set a status indicative of the behavior of the controller platform **120** in the reconfiguration of network nodes **E2(i)** using node control messages *CN.* According to an embodiment of the present invention, the parameter *Instructive_msg* can be set to an "ON" value or to an "OFF" value. When the parameter *Instructive_msg* is set to "ON", the controller platform **120** is allowed to send node control messages *CN* to the network nodes **E2(i).** When the parameter *Instructive_msg* is set to "OFF", the controller platform **120** is prevented from sending node control messages *CN* to the network nodes **E2(i).** Additional values of the parameter *Instructive_msg* can be provided, such as for example a value "ON_ONLY_L3" to enable the controller platform **120** to send node control messages *CN* only for a Layer 3 protocol reconfiguration. The parameter *Instructive_msg* can also be used to enable system redundancy avoiding interference between two or more controller platforms **120** controlling a same set of network nodes **E2(i).** According to an embodiment of the present invention, when a new version of a controller platform **120** is deployed, its parameter *Instructive_msg* can be automatically set to "OFF" for a predetermined time.

According to an embodiment of the present invention, the configuration data *CD* comprise a list *TaskList* of the tasks *TSK(k)* that can be managed by the control platform **120.** For each task *TSK(k)* of the list *TaskList,* the following is provided:
- a parameter *TaskType* indicative of the purpose of the task *TSK(k),* such as for example monitoring of potentials network faults, handling of QoE, handling of QoS, handling of network traffic balance;
- a parameter *TaskPriority* indicative of a priority (for example, an integer value) of the task *TSK(k)* to be used for resolving conflicts when applications **xAPP(j)** relating to different tasks *TSK(k)* are running concurrently;
- a list *xAPPList* identifying the applications **xAPP(j)** involved for carrying out the task *TSK(k)* (the list *xAPPList* can be void or set to a null value if the task *TSK(k)* is not managed by the controller platform **120**).

According to an embodiment of the present invention, the configuration data *CD* comprise a list *xAPPListDescriptionList* providing parameters describing each of the applications **xAPP(j)** involved in the tasks *TSK(k)* listed in the list *TaskList* (*i.e.,* the applications **xAPP(j)** listed in the lists *xAPPList* of the controller platform **120**). According to an embodiment of the present invention, for each application **xAPP(j)** listed in the lists *xAPPList,* the list *xAPPListDescriptionList* provides the following parameters:
- a parameter *xAPPId* identifying the application **xAPP(j);**
- a parameter *xAPPName* providing a name for the application **xAPP(j)** (this parameter can be also used to identify the application in addition to or in the place of the parameter *xAPPId*);
- a parameter *xAPPVersion* identifying the software version of the application **xAPP(j);**
- a parameter *A1PolicySupported* identifying which policies requested by the SMO module **110** can be handled by the application **xAPP(j);**
- a parameter *xAPPStatus* identifying a status of the application **xAPP(j)** (*e.g.,* "running", "hold", "crashed"), which can be modified by the SMO module **110;**
- a parameter *xAPPVendor* identifying the vendor of the application **xAPP(j).**

It is pointed out that the parameters listed above are only an example of the configuration data *CD* that can be exploited by the controller platform **120,** and the concepts of the present invention can also be applied to cases in which the configuration data *CD* are different from the ones described above, provided that the configuration data *CD* comprise at least a list *TaskList* of the tasks *TSK(k)* that can be managed by the control platform **120,** and a list *xAPPListDescriptionList* providing parameters describing each of the applications **xAPP(j)** involved in the tasks *TSK(k)* listed in the list *TaskList.*

According to an embodiment of the present invention, the configuration data *CD* can be stored in the database module **148** in form of a configuration file, for example in xml, yang, Json, or other suitable format.

An exemplary configuration file of the configuration data *CD* according to an embodiment of the present invention is provided hereinbelow (using the xml format).

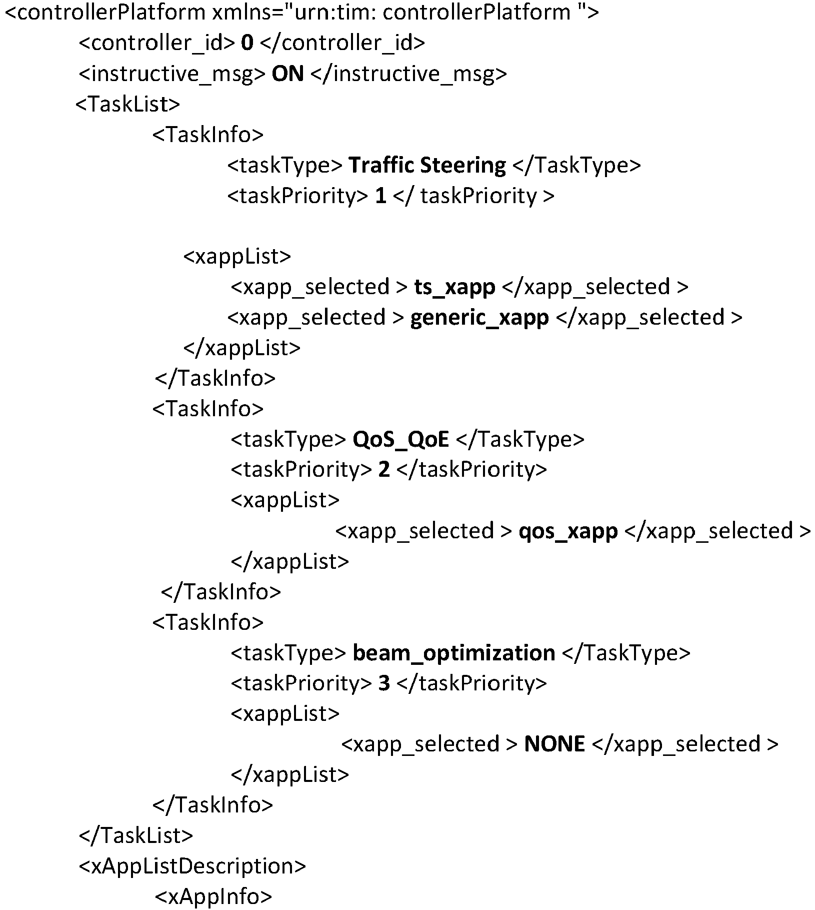

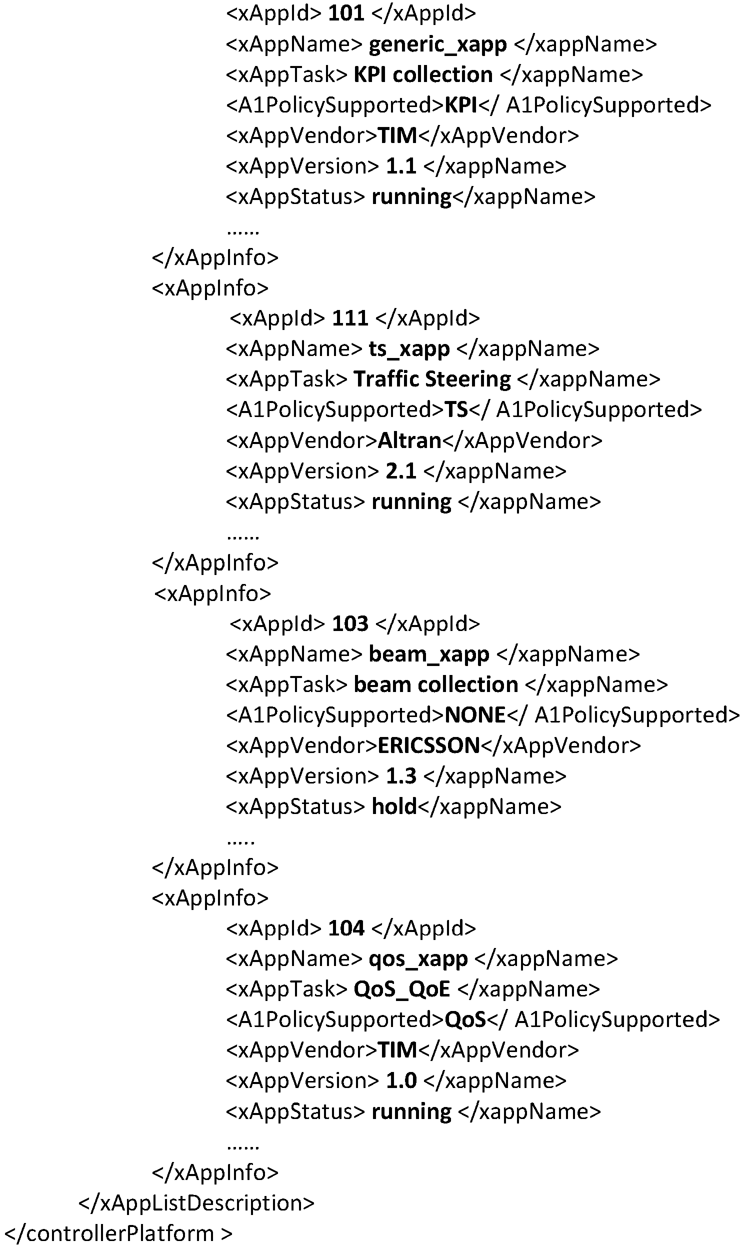

In the exemplary xml configuration file of the configuration data *CD* listed above, all the information related to a block is contained inside *<block name><*/*block name>.* For example, the information related to a task *TSK(k)* is contained inside *<TaskInfo><*/*TaskInfo>.*

The exemplary xml configuration file described above shows for example three tasks *TSK(k)* that can be managed by the controller platform **120,** *i.e.,* a Traffic Steering task *TSK(k)* (*TaskType*: "Traffic Steering"), a Quality of Experience/Quality of Service task *TSK(k)* (*TaskType*: "QoS_QoE") and beam optimization task *TSK(k)* (*TaskType*: "beam_optimization"). The Traffic Steering task *TSK(k)* is configured with priority 1 and is configured to be carried out by two applications **xAPP(j)** (the application **xAPP(j)** "ts_xapp" and the application **xAPP(j)** "generic_xapp"). The Quality of Experience/Quality of Service task *TSK(k)* is configured with priority 2 and is configured to be carried out by a single application **xAPP(j)** (the application **xAPP(j)** "qos_xapp"). The beam optimization task *TSK(k)* is configured with priority 3 but is configured to be a task *TSK(j)* that is not handled by the controller platform **120.** In the considered example, the exemplary application **xAPP(j)** "ts_xapp" can be identified through the parameter *xAPPId* (equal to "111") and/or the parameter *xAPPName* (equal to "ts_xapp"), has a software version *xAPPVersion* equal to 2.1, can handle policies *A1PolicySupported* of the "TS" kind, its current status *xAPPStatus* is "running", and the vendor *xAPPVendor* is "Altran".

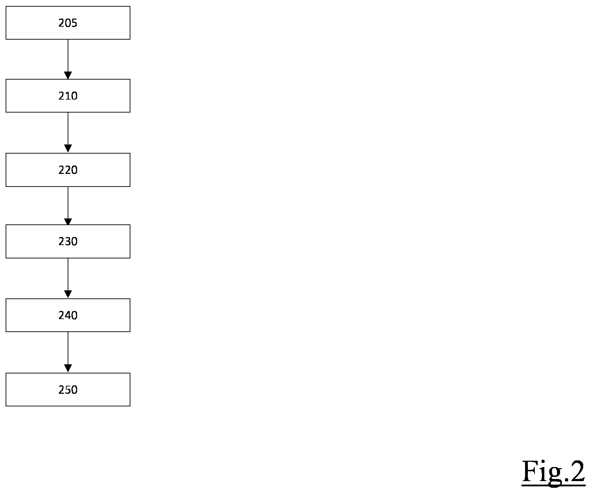

**Figure 2** depicts a flow chart showing in terms of functional blocks **205 - 250** a lifecycle of applications **xAPP(j)** managed by the controller platform **120** according to an embodiment of the present invention.

### Application installation (block 205)

According to an embodiment of the present invention, one or more applications **xAPP(j)** are installed in the controller platform **120.** The installation procedure depends on the platform virtualization environment.

### Information transmission management (block 210)

When an application **xAPP(j)** is installed, according to an embodiment of the present invention, it sends an application management message *XAM* comprising information describing the application **xAPP(j).** According to an embodiment of the present invention, the application management message *XAM* is collected by the data buffer module **150,** and then the data buffer module **150** provides it to the management and conflict module **160.** Then, the management and conflict module **160** accordingly updates the database **148** with the received application management message *XAM* in order to provide the database **148** with information about the application **xAPP(j).** According to an embodiment of the present invention, when an application **xAPP(j)** is installed, the application **xAPP(j)** is not operating yet, its status (identified by the parameter *xAPPStatus)* being set to "hold". The operation of the application **xAPP(j)** is enabled by having its status (identified by the parameter *xAPPStatus*) switched from "hold" to "running" in response to a corresponding configuration message *CF* sent by the orchestrator module **140.**

Since the data buffer module **150** according to an embodiment of the present invention is configured to collect from the network nodes **E2(i)** information data *EI* regarding the status of the network nodes **E2(i),** and the applications **xAPP(j)** have a direct access to the data buffer module **150,** said information data *EI* are advantageously made available to all the application **xAPP(j)** that are currently running on the controller platform **120.** In this way, all the applications **xAPP(j)** that are currently running on the controller platform **120** are advantageously aware of all the modifications occurred at the network nodes **E2(i),** and, when required for their operations, the applications **xAPP(j)** are able to easily collect the information data *EI* available on the data buffer module **150. .**

### Controller platform update by SMO controller module and Controller platform monitoring by the management and conflict module 160 (block 220)

According to an embodiment of the present invention, the information describing an application **xAPP(j)** contained in an application management message *XAM* received by the data buffer module **150** are collected by the management and conflict module **160,** and then sent by the latter to the database module **148** for updating the configuration data *CD* relating to said application **xAPP(j),** and particularly the corresponding list *xAPPListDescriptionList.*

According to an embodiment of the present invention, the management and conflict module **160** may monitor the database module **148** for possible updates/modifications of the configuration data *CD* (for example the parameter *Instructive_msg* for changing a status of the controller platform **120**) carried out by the SMO controller module **130** through request messages *RQ* collected by the A1 manager module ***155**.*

### Controller platform update and monitoring by user GUI (block 230)

According to an embodiment of the present invention, the configuration server module **170** may monitor and inspect the configuration data *CD* stored in the database module **148,** so as to expose to the orchestrator module **140** the configuration data *CD* (*e.g.,* the *xAPPListDescriptionList* portion showing the status or configuration of running and/or newly installed applications **xAPP(j)**) through corresponding monitoring messages *MN.* For example, according to an embodiment of the present invention, a monitoring message *MN* comprising a subset of configuration data *CD* relating to a specific application **xAPP(j)** may be generated by the configuration server module **170** and sent to the orchestrator module **140** in response to a corresponding monitoring request regarding said specific application **xAPP(j)** carried out by a user of the orchestrator module **140,** for example through the GUI module **145.**

According to an embodiment of the present invention, the orchestrator module **140** (for example, under the control of a user, *e.g*., through the GUI module **145**) may modify the configuration data *CD* stored in the database module **148** (for example, some parameters of one or more of the tasks *TSK(k)* listed in the list *TaskList,* or some parameters of one or more of the applications **xAPP(j)** listed in the list *xAPPListDescriptionList*) by sending corresponding configuration messages *CF* to the configuration server module **170.** In this way, according to an embodiment of the present invention, the configuration server module **170** accordingly updates/modifies the proper portions of the configuration data *CD* stored in the database module **148** based on the received configuration messages *CF*.

### Policy requests management (block 240)

According to an embodiment of the present invention, when the SMO controller module **130** sends a request message *RQ* to set a specific policy involving one or more applications **xAPP(j),** the controller platform **120** is able to identify said one or more involved application(s) **xAPP(j)** by exploiting the information contained in the database **148.** According to an embodiment of the present invention, the A1 manager module **155** inspects the portion(s) of the configuration data *CD* stored in the database module **148** pertaining to said application(s) **xAPP(j),** such as the parameter *A1PolicySupported* included in the list *xAPPListDescriptionList* corresponding to said application(s) **xAPP(j),** and accordingly exploits the inspected configuration data *CD* to forward the request message *RQ* to the correct application(s) **xAPP(j)** through the data buffer module **150.**

### Node control messages management (block 250)

According to an embodiment of the present invention, when an application **xAPP(j)** generates a node control message *CN* to be forwarded to selected network nodes **E2(i)** so as to carry out a specific task *TSK(k)* on said selected network nodes **E2(i),** said node control message *CN* is collected by the data buffer module **150.** Then, under the control of the management and conflict module **160,** and exploiting the portion(s) of the configuration data *CD* stored in the database module **148** pertaining to said task *TSK(k)* and to said application **xAPP(j)** - such as for example the parameter *xAPPId -* the data buffer module **150** forwards the node control message *CN* to the selected network nodes **E2(i).** According to an embodiment of the present invention, any conflict among different applications **xAPP(j)** is managed by the management and conflict module **160** based on the configuration data *CD* pertaining to the tasks *TSK(k)* carried out by said applications **xAPP(j),** such as for example exploiting the parameters *TaskPriority* of the involved tasks *TSK(k).*

According to an embodiment of the present invention, an application **xAPP(j)** sends a node control message *CN* by publishing it on the data buffer module **150** using a specific topic in order to allow the controller platform **120** to capture this message in the management and conflict module **160.** Then, the node control message *CN* is forwarded to the E2 termination module **180** only if it is deemed appropriate according to the configuration data *CD.* According to an embodiment of the present invention, the E2 termination module **180** is listening for a control message *CN* from the data buffer module **150** to execute it in a reserved topic.

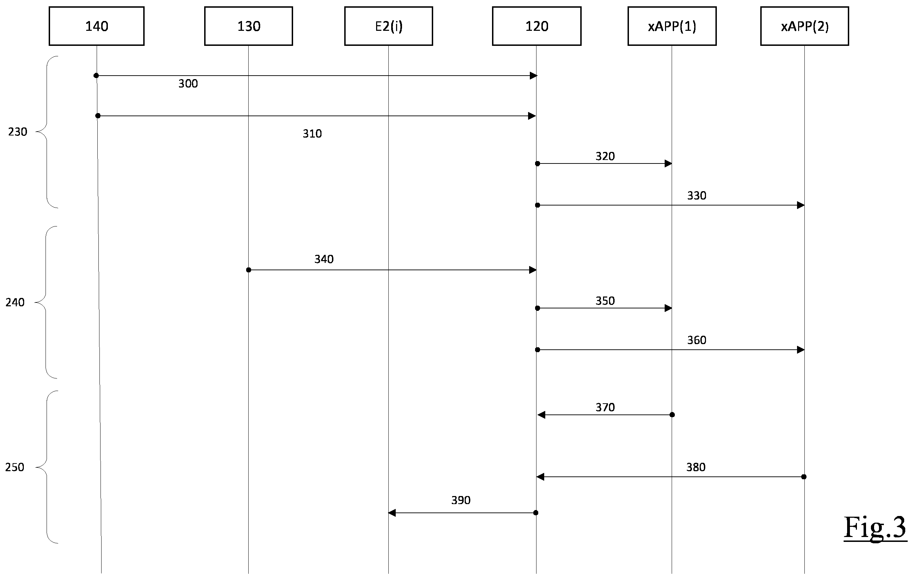

**Figure 3** schematically illustrates in greater detail a set of operation phases carried out by the SMO controller module **130,** by the orchestrator module **140,** and by the controller platform **120** relating to a portion of the lifecycle (corresponding to the functional blocks **230- 250** of **Figure 2**) of two exemplary applications **xAPP(1), xAPP(2)** according to an exemplary embodiment of the present invention.

The first phase according to an exemplary embodiment of the present invention provides for having the orchestrator module **140** get the status and the configuration of the controller platform **120** and of the applications **xAPP(j)** installed in the controller platform **120** (operation **300**). For this purpose, according to an embodiment of the present invention, the orchestrator module **140** collects (*e.g.,* a subset of) the configuration data *CD* stored in the database module **148** that have been exposed by the server module **170** through corresponding monitoring messages *MN.*

The next phase according to an exemplary embodiment of the present invention provides for having the orchestrator module **140** request the controller platform **120** to change the configuration of one or more tasks *TSK(j)* by requesting the modification of corresponding portions of the configuration data *CD* stored in the database module **148** by sending corresponding configuration messages *CF* to the configuration server module **170** of the controller platform **120** (operation **310**). For example, the orchestrator module **140** may request to change the priority of a first task *TSK(1)* and of a second task *TSK(2)* (by properly modifying the corresponding parameters *TaskPriority* in the configuration data *CD*), or may assign the application **xAPP(1)** to the first task *TSK(1),* and the application **xAPP(2)** to the second task *TSK(2)* (by properly modifying the corresponding lists *xAPPList* in the configuration data *CD*). The modification of the configuration data *CD* regarding the first task *TSK(1)* may cause a modification of the status (parameter *xAPPStatus)* of the application **xAPP(1)** (operation **320**) and the modification of the configuration data *CD* regarding the second task *TSK(2)* may cause a modification of the status (parameter *xAPPStatus)* of the application **xAPP(2)** (operation **330**). For example, the parameters *xAPPStatus* of the applications **xAPP(1) xAPP(2)** are switched from "hold" to "running".

It is pointed out that the operations **300 - 330** described above correspond to the functional block **230** of **Figure 2****.**

The next phase according to an exemplary embodiment of the present invention provides for having the SMO controller module **130** provide a set of policies to the controller platform **120** for the application **xAPP(1)** for carrying out task *TSK(1)* and for the application **xAPP(2)** for carrying out task *TSK(2)* (operation **340**). For this purpose, the SMO controller module **130** sends a request message *RQ* of said set of policies to the A1 interface, that is collected by the manager module **155** of the controller platform **120.** Then, the manager module **155** inspects the configuration data *CD* stored in the database module **148** in order to identify the applications **xAPP(1)** and **xAPP(2).** For example, based on the configuration data *CD* stored in the database module **148** pertaining to the task *TSK(1),* such as the information included in the list *xAPPListDescriptionList* corresponding to said task *TSK(1)* and the parameter *A1PolicySupported* corresponding to said application **xAPP(1),** the A1 manager module **155** forwards the set of policies to the application **xAPP(1)** (operation **350**). Similarly, based on the configuration data *CD* stored in the database module **148** pertaining to the task *TSK(2),* such as the information included in the list *xAPPListDescriptionList* corresponding to said task *TSK(2)* and the parameter *A1PolicySupported* corresponding to said application **xAPP(2),** the A1 manager module **155** forwards the set of policies to the application **xAPP(2)** (operation **360**).

It is pointed out that the operations **340 - 360** described above correspond to the functional block **240** of **Figure 2****.**

The next phase according to an exemplary embodiment of the present invention provides for having the application **xAPP(1)** send to the controller platform **120** a node control message *CN* (operation **370**) to be forwarded to selected network nodes **E2(i)** so as to carry out the task *TSK(1)* on said selected network nodes **E2(i)** and having the application **xAPP(2)** send to the controller platform **120** a node control message *CN* (operation **380**) to be forwarded to selected network nodes **E2(i)** so as to carry out the task *TSK(2)* on said selected network nodes **E2(i).** The control messages *CN* provided by the two applications **xAPP(1), xAPP(2)** are collected by (and published on) the data buffer module **150.** The management and conflict module **160,** exploiting the portion(s) of the configuration data *CD* pertaining to the task *TSK(1)* - such as its parameter *TaskPriority -* and pertaining to the application **xAPP(1)** - such as for example its parameter *xAPPId -,* and exploiting the portion(s) of the configuration data *CD* pertaining to the task *TSK(2)* - such as its parameter *TaskPriority -* and pertaining to the application **xAPP(2)** - such as for example its parameter *xAPPId,* manages the forwarding of the node control messages *CN* provided by the two applications **xAPP(1), xAPP(2)** to the corresponding selected network nodes **E2(i)** (operation **390**). Particularly, according to an embodiment of the present invention, the management and conflict module **160** exploits the abovementioned portion(s) of the configuration data for deciding if both the node control messages *CN* provided by the two applications **xAPP(1), xAPP(2)** can be concurrently forwarded to the selected network nodes **E2(i)** without causing collisions, or only the node control message *CN* of one of the two applications **xAPP(1), xAPP(2)** can be transmitted in order to avoid collisions.

An example of management of a potential application collision by the management and conflict module **160** may provide for a case in which:
- the application **xAPP(1)** has the parameter *xAPPName* equal to "ts_xapp", and the task *TSK(1)* has the parameter *TaskType* equal to "Traffic Steering" and the parameter *TaskPriority* equal to "1";
- the application **xAPP(2)** has the parameter *xAPPName* equal to "qos_xapp", and the task *TSK(2)* has the parameter *TaskType* equal to "QoS_QoE" and the parameter *TaskPriority* equal to "2";
- the node control message *CN* provided by the application **xAPP(1)** provides for asking the controller platform **120** to change a carrier frequency for a user equipment from 1800 MHz to 2600 MHz;
- the node control message *CN* provided by the application **xAPP(2)** provides for asking the controller platform **120** to reserve 30 physical resource blocks for a user equipment.

The node control messages *CN* provided by the applications **xAPP(1)** and **xAPP(2)** are both published on the data buffer module **150.** The management and conflict module **160** assesses that the task *TSK(1)* (Traffic Steering) has a higher priority than the task *TSK(2)* (QoS_QoE) by comparing the respective parameters *TaskPriority,* and therefore decides to take into account the task *TSK(1)* before the task *TSK(2).* In addition, the management and conflict module **160** assesses that the task *TSK(2)* depends on the carrier frequency.

In view of the above, the management and conflict module **160** assesses (in the following order) that:
- the node control message *CN* provided by the application **xAPP(1)** can be forwarded to the selected network nodes **E2(i),** and
- the control message *CN* provided by the application **xAPP(2)** cannot be forwarded to the selected network nodes **E2(i)** because, following the carrier frequency switch action caused by the control message *CN* provided by the application **xAPP(1),** the new value of the carrier frequency would be not compatible with the action requested by the control message *CN* provided by the application **xAPP(2).**

Therefore, the management and conflict module **160** controls the data buffer module **150** to send only the control message *CN* provided by the application **xAPP(1)** to the network nodes **E2(i)** through the E2 termination module **180.**

The application **xAPP(2)** will then provide a second control message *CN* in a subsequent time calibrated on carrier frequency of 2600 MHz.

Naturally, in order to satisfy local and specific requirements, a person skilled in the art may apply to the invention described above many logical and/or physical modifications and alterations. More specifically, although the present invention has been described with a certain degree of particularity with reference to preferred embodiments thereof, it should be understood that various omissions, substitutions and changes in the form and details as well as other embodiments are possible. In particular, different embodiments of the invention may even be practiced without the specific details set forth in the preceding description for providing a more thorough understanding thereof; on the contrary, well-known features may have been omitted or simplified in order not to encumber the description with unnecessary details.

## Claims

1. A mobile communication network (**100**), comprising:
- a plurality of radio network nodes (**E2(i)**);
- a service manager orchestrator module (**110**) configured to handle network service and operation and configuration of the radio network nodes (**E2(i)**) by generating requests *RQ* requesting policies for the management of said radio network nodes (**E2(i)**);
- a controller platform (**120**) configured to manage the radio network nodes (**E2(i)**) by controlling the execution of applications (**xAPP(j)**) for carrying out tasks *TSK(k)* on the radio network nodes (**E2(i)**) according to policies requested by the service manager orchestrator module (**110**) through the requests *RQ,*
wherein the service manager orchestrator module (**110**) is configured to exploit an interface between the service manager orchestrator module (**110**) and the controller platform (**120**) for forwarding said requests *RQ*, generated by the service manager orchestrator module (**110**), to the controller platform (**120**);
wherein the controller platform (**120**) comprises:
- a database module (**148**) configured to store configuration data *CD* comprising data about the configuration and status of said tasks *TSK(k)* and of said applications (**xAPP(j)**),
**characterized in that**:
- the controller platform (**120**) further comprises:
- a data buffer module (**150**) configured to manage data communication among the applications (**xAPP(j)**), the service manager orchestrator module (**110**) and the radio network nodes (**E2(i)**), and
- a control system (**185**) configured to manage the lifecycle of the applications (**xAPP(j)**) by controlling the data buffer based on said configuration data *CD*;
- said configuration data CD comprises, for each one of said tasks *TSK(k),* a task priority parameter indicative of a priority of said task *TSK(k),*
wherein:
- each application (**xAPP(j)**) is configured to generate a node control message *CN* to be forwarded to selected radio network nodes (**E2(i)**) so as to carry out a task *TSK(k)* on said selected network nodes (**E2(i)**), each application being configured to provide said control message *CN* to the data buffer module (**150**);
- said control system (**185**) comprises a management and conflict module (**160**) configured to forward said node control message *CN* to the selected radio network nodes (**E2(i)**) through the data buffer module (**150**) by controlling said data buffer module (**150**) based on said configuration data *CD;*
the management and conflict module (**160**) is configured to control the data buffer module (**150**) so that, when at least two applications (**xAPP(j)**) are concurrently providing node control messages *CN* to the data buffer module (**150**), the node control messages *CN* are actually forwarded to the selected radio network nodes (**E2(i)**) based on a comparison of the task priority parameters of the tasks *TSK(k)* involving said at least two applications (**xAPP(j)**).

2. The mobile communication network (**100**) of claim 1, wherein said configuration data *CD* further comprises:
- for each one of said tasks *TSK(k),* at least one among:
- a task type parameter indicative of a purpose of said task *TSK(k)*;
- an application list listing the applications (**xAPP(j)**) involved for carrying out said task,
and
- for each one of said applications ((**xAPP(j)**), at least one among:
- an application identification parameter identifying the application;
- an application policy parameter identifying policies supported by the application;
- an application status parameter identifying a status of the application.

3. The mobile communication network (**100**) of claim 1 or 2, wherein said configuration data *CD* further comprises data about the configuration and status of the controller platform (**120**).

4. The mobile communication network (**100**) of claim 3, wherein said configuration data *CD* comprises at least one between:
- a controller platform identification parameter identifying the controller platform;
- a controller platform status parameter identifying a status of the controller platform.

5. The mobile communication network (**100**) of any of the preceding claims, wherein said control system (**185**) comprises a manager module (**155**) configured to:
- receive from the service manager orchestrator module (**110**) a request *RQ* to set a policy for the operation of at least one application (**xAPP(j)**) involved in the carrying out of a task *TSK(k),*
- provide said request *RQ* to the data buffer module (**150**), and
- cause said request *RQ* to be forwarded to said at least one application (**xAPP(j)**) through the data buffer module (**150**) by controlling said data buffer module (**150**) based on said configuration data *CD.*

6. The mobile communication network (**100**) of claim 5 when depending on claim 2, wherein said manager module (**155**) is configured to forward said request *RQ* to said at least one application (**xAPP(j)**) by controlling said data buffer module (**150**) based at least on the application policy parameter corresponding to said at least one application (**xAPP(j)**).

7. The mobile communication network (**100**) of any of the preceding claims, wherein the controller platform (**120**) is configured to control the data buffer module (**150**) to collect from the radio network nodes (**E2(i)**) information data *EI* regarding the status of the radio network nodes (**E2(i)**) and to make said collected information data *EI* available to the applications (**xAPP(j)**) that are currently running.

8. The mobile communication network of any of the preceding claims, wherein the service manager orchestrator module (**110**) comprises an orchestrator module (**140**) configured to update/modify said configuration data *CD* for reconfiguring the controller platform (**120**).

9. The mobile communication network (**100**) of any of the preceding claims, wherein said tasks *TSK(k)* comprises at least one among:
- a task directed to monitoring potentials network faults;
- a task directed to handle Quality of Experience;
- a task directed to handle Quality of Service;
- a task directed to handle network traffic balance;
- a task directed to handle network interference.

10. The mobile communication network (**100**) of any of the preceding claims, wherein said mobile communication network is a 4G or a 5G mobile communication network configured to implement Self-Organizing Network capabilities.

11. A method for managing a mobile communication network (**100**) including a plurality of radio network nodes (**E2(i)**), comprising;
- handling, by a service manager orchestrator module (**110**) of the mobile communication network (**100**), network service and operation and configuration of the radio network nodes (**E2(i)**) by generating requests *RQ* requesting policies for the management of said radio network nodes (**E2(i)**) by forwarding said requests *RQ*, generated by the service manager orchestrator module (**110**), to a controller platform (**120**) exploiting an interface between the service manager orchestrator module (**110**) and the controller platform (**120**);
- managing, by the controller platform (**120**), the radio network nodes (**E2(i)**) by controlling the execution of applications (**xAPP(j)**) for carrying out tasks *TSK(k)* on the radio network nodes (**E2(i)**) according to policies requested through the requests *RQ*, wherein said managing the radio network nodes comprises:
- storing, in a database module (**148**) of the controller platform (**120**), configuration data *CD* comprising data about the configuration and status of said tasks *TSK(k)* and of said applications (**xAPP(j)**),
**characterized by** further comprising:
- managing, through a data buffer module (**150**) of the controller platform (**120**):
- data communication between the applications **(xAPP(j))** and the radio network nodes (**E2(i)**), and
- communication of the requests *RQ* to the applications (**xAPP(j)**),
- managing, through a control system (**185**) of the controller platform (**120**), the lifecycle of the applications (**xAPP(j)**) by controlling the data buffering based on said configuration data *CD.*
wherein:
- said configuration data CD comprises, for each one of said tasks *TSK(k),* a task priority parameter indicative of a priority of said task *TSK(k),*
- each application (**xAPP(j)**) generating a node control message *CN* to be forwarded to selected radio network nodes (**E2(i)**) so as to carry out a task *TSK(k)* on said selected network nodes (**E2(i)**), each application providing said control message *CN* to the data buffer module (**150**);
- said control system (**185**) comprises a management and conflict module (**160**) forwarding said node control message *CN* to the selected radio network nodes (**E2(i)**) through the data buffer module (**150**) by controlling said data buffer module (**150**) based on said configuration data *CD;*
the management and conflict module (**160**) is controlling the data buffer module (**150**) so that, when at least two applications (**xAPP(j)**) are concurrently providing node control messages *CN* to the data buffer module (**150**), the node control messages *CN* are actually forwarded to the selected radio network nodes (**E2(i)**) based on a comparison of the task priority parameters of the tasks *TSK(k)* involving said at least two applications (**xAPP(j)**).

## Patentansprüche

1. Mobiles Kommunikationsnetzwerk (**100**), das Folgendes umfasst:
- eine Mehrzahl von Funknetzwerkknoten (**E2(i)**);
- ein Dienstverwalterorchestratormodul (**110**), das dazu ausgelegt ist, durch Erzeugen von Anforderungen *RQ,* die Richtlinien für die Verwaltung der Funknetzwerkknoten (**E2(i)**) erzeugen, einen Netzwerkdienst und -betrieb und eine Auslegung der Funknetzwerkknoten (**E2(i)**) handzuhaben;
- eine Steuerplattform (**120**), die dazu ausgelegt ist, durch Steuern der Ausführung von Anwendungen **(xAPP(j))** zum Umsetzen von Aufgaben *TSK(k)* auf den Funknetzwerkknoten (**E2(i)**) gemäß Richtlinien, die vom Dienstverwalterorchestratormodul (**110**) über die Anforderungen *RQ* angefordert werden, die Funknetzwerkknoten (**E2(i)**) zu verwalten,
wobei das Dienstverwalterorchestratormodul (**110**) dazu ausgelegt ist, eine Schnittstelle zwischen dem Dienstverwalterorchestratormodul (**110**) und der Steuerplattform (**120**) zum Weiterleiten der Anforderungen *RQ,* die vom Dienstverwalterorchestratormodul (**110**) erzeugt werden, zur Steuerplattform (**120**) zu nutzen;
wobei die Steuerplattform (**120**) Folgendes umfasst:
- ein Datenbankmodul (**148**), das dazu ausgelegt ist, Auslegungsdaten *CD* zu speichern, die Daten über die Auslegung und den Status der Aufgaben *TSK(k)* und der Anwendungen **(xAPP(j))** umfassen,
**dadurch gekennzeichnet, dass**:
- die Steuerplattform (**120**) ferner Folgendes umfasst:
- ein Datenpuffermodul (**150**), das dazu ausgelegt ist, eine Datenkommunikation unter den Anwendungen **(xAPP(j)),** dem Dienstverwalterorchestratormodul (**110**) und den Funknetzwerkknoten (**E2(i)**) zu verwalten, und
- ein Steuersystem (**185**), das dazu ausgelegt ist, durch Steuern des Datenpuffers auf Basis der Auslegungsdaten *CD* den Lebenszyklus der Anwendungen **(xAPP(j))** zu verwalten;
- die Auslegungsdaten *CD* für jede der Aufgaben *TSK(k)* einen Aufgabenprioritätsparameter umfassen, der eine Priorität der Aufgabe *TSK(k)* anzeigt,
wobei:
- jede Anwendung (**xAPP(j)**) dazu ausgelegt ist, eine Knotensteuernachricht *CN* zu erzeugen, die zu ausgewählten Funknetzwerkknoten (**E2(i)**) weiterzuleiten ist, um eine Aufgabe *TSK(k)* auf den ausgewählten Netzwerkknoten (**E2(i)**) umzusetzen, wobei jede Anwendung dazu ausgelegt ist, die Steuernachricht *CN* dem Datenpuffermodul (**150**) bereitzustellen;
- das Steuersystem (185) ein Verwaltungs- und Konfliktmodul (**160**) umfasst, das dazu ausgelegt ist, durch Steuern des Datenpuffermoduls (**150**) auf Basis der Auslegungsdaten *CD* die Knotensteuernachricht *CN* über das Datenpuffermodul (**150**) zu den ausgewählten Funknetzwerkknoten (**E2(i)**) weiterzuleiten;
das Verwaltungs- und Konfliktmodul (**160**) dazu ausgelegt ist, das Datenpuffermodul (**150**) derart zu steuern, dass, wenn mindestens zwei Anwendungen **(xAPP(j))** dem Datenpuffermodul (**150**) gleichzeitig Knotensteuernachrichten *CN* bereitstellen, die Knotensteuernachrichten *CN* auf Basis eines Vergleichs der Aufgabenprioritätsparameter der Aufgaben *TSK(k),* an denen die mindestens zwei Anwendungen **(xAPP(j))** beteiligt sind, tatsächlich zu den ausgewählten Funknetzwerkknoten (**E2(i)**) weitergeleitet werden.

2. Mobiles Kommunikationsnetzwerk (**100**) nach Anspruch 1, wobei die Auslegungsdaten *CD* ferner Folgendes umfassen:
- für jede der Aufgaben *TSK(k)* mindestens eines von Folgendem:
- einem Aufgabentypparameter, der einen Zweck der Aufgabe *TSK(k)* anzeigt;
- einer Anwendungsliste, die die Anwendungen (**xAPP(j)**) auflistet, die am Umsetzen der Aufgabe beteiligt sind, und
- für jede der Anwendungen ((**xAPP(j)**) mindestens eines von Folgendem:
- einem Anwendungsidentifikationsparameter, der die Anwendung identifiziert;
- einem Anwendungsrichtlinienparameter, der Richtlinien identifiziert, die von der Anwendung unterstützt werden;
- einem Anwendungsstatusparameter, der einen Status der Anwendung identifiziert.

3. Mobiles Kommunikationsnetzwerk (**100**) nach Anspruch 1 oder 2, wobei die Auslegungsdaten *CD* ferner Daten über die Auslegung und den Status der Steuerplattform (**120**) umfassen.

4. Mobiles Kommunikationsnetzwerk (**100**) nach Anspruch 3, wobei die Auslegungsdaten *CD* mindestens eines von Folgendem umfassen:
- einem Steuerplattformidentifikationsparameter, der die Steuerplattform identifiziert;
- einem Steuerplattformstatusparameter, der einen Status der Steuerplattform identifiziert.

5. Mobiles Kommunikationsnetzwerk (**100**) nach einem der vorhergehenden Ansprüche, wobei das Steuersystem (**185**) ein Verwaltermodul (**155**) umfasst, das zu Folgendem ausgelegt ist:
- Empfangen einer Anforderung *RQ* zum Einstellen einer Richtlinie für den Betrieb von mindestens einer Anwendung (**xAPP(j)**), die am Umsetzen einer Aufgabe *TSK(k)* beteiligt ist, vom Dienstverwalterorchestratormodul (**110**),
- Bereitstellen der Anforderung *RQ* für das Datenpuffermodul (**150**) und
- Veranlassen der Anforderung *RQ,* durch Steuern des Datenpuffermoduls (**150**) auf Basis der Auslegungsdaten *CD* über das Datenpuffermodul (**150**) zu der mindestens einen Anwendung **(xAPP(j))** weitergeleitet zu werden.

6. Mobiles Kommunikationsnetzwerk (**100**) nach Anspruch 5, sofern von Anspruch 2 abhängig, wobei das Verwaltermodul (**155**) dazu ausgelegt ist, durch Steuern des Datenpuffermoduls (**150**) mindestens auf Basis des Anwendungsrichtlinienparameters, der der mindestens einen Anwendung (**xAPP(j)**) entspricht, die Anforderung *RQ* zu der mindestens einen Anwendung (**xAPP(j)**) weiterzuleiten.

7. Mobiles Kommunikationsnetzwerk (**100**) nach einem der vorhergehenden Ansprüche, wobei die Steuerplattform (**120**) dazu ausgelegt ist, das Datenpuffermodul (**150**) zum Steuern der Funknetzwerkknoten(**E2(i)**)-Informationsdaten *EI* mit Bezug auf den Status der Funknetzwerkknoten (**E2(i)**) und zum Verfügbarmachen der gesammelten Informationsdaten *EI* für die Anwendungen (**xAPP(j)**), die gleichzeitig laufen, zu steuern.

8. Mobiles Kommunikationsnetzwerk nach einem der vorhergehenden Ansprüche, wobei das Dienstverwalterorchestratormodul (**110**) ein Orchestratormodul (**140**) umfasst, das dazu ausgelegt ist, die Auslegungsdaten *CD* zum Neuauslegen der Steuerplattform (**120**) zu aktualisieren/modifizieren.

9. Mobiles Kommunikationsnetzwerk (**100**) nach einem der vorhergehenden Ansprüche, wobei die Aufgaben *TSK(k)* mindestens eines von Folgendem umfassen:
- einer Aufgabe, die auf das Überwachen von Potenzialen Netzwerkfehlern ausgerichtet ist;
- einer Aufgabe, die auf das Handhaben einer Erfahrungsqualität ausgerichtet ist;
- einer Aufgabe, die auf das Handhaben einer Dienstqualität ausgerichtet ist;
- einer Aufgabe, die auf das Handhaben einer Netzwerkverkehrsausgewogenheit ausgerichtet ist;
- einer Aufgabe, die auf das Handhaben einer Netzwerkinterferenz ausgerichtet ist.

10. Mobiles Kommunikationsnetzwerk (100) nach einem der vorhergehenden Ansprüche, wobei das mobile Kommunikationsnetzwerk ein mobiles 4G- oder 5G-Kommunikationsnetzwerk ist, das dazu ausgelegt ist, selbstorganisierende Netzwerkfähigkeiten zu implementieren.

11. Verfahren zum Verwalten eines mobilen Kommunikationsnetzwerks (**100**), das eine Mehrzahl von Funknetzwerkknoten (**E2(i)**) beinhaltet, das Folgendes umfasst;
- Handhaben von Netzwerkdienst und -betrieb und einer Auslegung der Funknetzwerkknoten (**E2(i)**) durch ein Dienstverwalterorchestratormodul (**110**) des mobilen Kommunikationsnetzwerks (**100**) durch Erzeugen von Anforderungen *RQ,* die Richtlinien für die Verwaltung der Funknetzwerkknoten (**E2(i)**) anfordern, durch Weiterleiten der Anforderungen *RQ,* die vom Dienstverwalterorchestratormodul (**110**) erzeugt werden, zu einer Steuerplattform (**120**), die eine Schnittstelle zwischen dem Dienstverwalterorchestratormodul (**110**) und der Steuerplattform (**120**) nutzt;
- Verwalten der Funknetzwerkknoten (**E2(i)**) durch die Steuerplattform (**120**) durch Steuern der Ausführung von Anwendungen **(xAPP(j))** zum Umsetzen von Aufgaben *TSK(k)* auf den Funknetzwerkknoten (**E2(i)**) gemäß Richtlinien, die über die Anforderungen *RQ* angefordert werden, wobei das Verwalten der Funknetzwerkknoten Folgendes umfasst:
- Speichern von Auslegungsdaten *CD,* die Daten über die Auslegung und den Status der Aufgaben *TSK(k)* und der Anwendungen (**xAPP(j)**) umfassen, in einem Datenbankmodul (**148**) der Steuerplattform (**120**),
**dadurch gekennzeichnet, dass** es ferner Folgendes umfasst:
- Verwalten von Folgendem über ein Datenpuffermodul (**150**) der Steuerplattform (**120**):
- einer Datenkommunikation zwischen den Anwendungen (**xAPP(j)**) und den Funknetzwerkknoten (**E2(i)**) und
- einer Kommunikation der Anforderungen *RQ* zu den Anwendungen (**xAPP(j)**),
- Verwalten des Lebenszyklus der Anwendungen (**xAPP(j)**) über das Steuersystem (**185**) der Steuerplattform (**120**) durch Steuern der Datenpufferung auf Basis der Auslegungsdaten *CD,*
wobei:
- die Auslegungsdaten *CD* für jede der Aufgaben *TSK(k)* einen Aufgabenprioritätsparameter umfassen, der eine Priorität der Aufgabe *TSK(k)* anzeigt,
- eine Anwendung (**xAPP(j)**), die eine Knotensteuernachricht *CN* erzeugt, die zu ausgewählten Funknetzwerkknoten (**E2(i)**) weiterzuleiten ist, um eine Aufgabe *TSK(k)* auf den ausgewählten Netzwerkknoten (**E2(i)**) umzusetzen, wobei jede Anwendung die Steuernachricht *CN* für das Datenpuffermodul (**150**) bereitstellt;
- das Steuersystem (**185**) ein Verwaltungs- und Konfliktmodul (**160**) umfasst, das durch Steuern des Datenpuffermoduls (**150**) auf Basis der Auslegungsdaten *CD* die Knotensteuernachricht *CN* über das Datenpuffermodul (**150**) zu den ausgewählten Funknetzwerkknoten (**E2(i)**) weiterleitet;
das Verwaltungs- und Konfliktmodul (**160**) das Datenpuffermodul (**150**) derart steuert, dass, wenn mindestens zwei Anwendungen (**xAPP(j)**) dem Datenpuffermodul (**150**) gleichzeitig Knotensteuernachrichten *CN* bereitstellen, die Knotensteuernachrichten *CN* auf Basis eines Vergleichs der Aufgabenprioritätsparameter der Aufgaben *TSK(k),* an denen die mindestens zwei Anwendungen (**xAPP(j)**) beteiligt sind, tatsächlich zu den ausgewählten Funknetzwerkknoten (**E2(i)**) weitergeleitet werden.

## Revendications

1. Réseau de communication mobile (**100**), comprenant :
- une pluralité de nœuds de réseau radio **(E2(i))** ;
- un module orchestrateur de gestionnaire de services (**110**) configuré pour gérer le service de réseau, l'exploitation et la configuration des nœuds de réseau radio **(E2(i))** en générant des demandes RQ demandant des politiques pour la gestion desdits nœuds de réseau radio **(E2(i))** ;
- une plateforme de contrôleur **(120)** configurée pour gérer les nœuds de réseau radio **(E2(i))** en commandant l'exécution d'applications **(xAPP(j))** pour la réalisation de tâches *TSK(k)* sur les nœuds de réseau radio **(E2(i))** conformément aux politiques demandées par le module orchestrateur de gestionnaire de services **(110)** par l'intermédiaire des demandes *RQ*,
dans lequel le module orchestrateur de gestionnaire de services **(110)** est configuré pour exploiter une interface entre le module orchestrateur de gestionnaire de services (**110**) et la plateforme de contrôleur **(120)** afin de transmettre lesdites demandes *RQ*, générées par le module orchestrateur de gestionnaire de services (**110**), à la plateforme de contrôleur **(120) ;**
dans lequel la plateforme de contrôleur **(120)** comprend :
- un module de base de données (**148**) configuré pour stocker des données de configuration *CD* comprenant des données relatives à la configuration et à l'état desdites tâches *TSK(k)* et desdites applications **(xAPP(j)),**
**caractérisé en ce que** :
- la plateforme de contrôleur **(120)** comprend en outre :
- un module de tampon de données **(150)** configuré pour gérer la communication de données entre les applications **(xAPP(j))**, le module orchestrateur de gestionnaire de services **(110)** et les nœuds de réseau radio **(E2(i)),** et
- un système de commande **(185)** configuré pour gérer le cycle de vie des applications **(xAPP(j))** en commandant le tampon de données sur la base desdites données de configuration *CD* ;
- lesdites données de configuration *CD* comprennent, pour chacune desdites tâches *TSK(k),* un paramètre de priorité de tâche indiquant une priorité de ladite tâche *TSK(k),*
dans lequel :
- chaque application **(xAPP(j))** est configurée pour générer un message de commande de nœud *CN* à transmettre à des nœuds de réseau radio sélectionnés **(E2(i))** afin de réaliser une tâche *TSK(k)* sur lesdits nœuds de réseau radio sélectionnés **(E2(i)),** chaque application étant configurée pour fournir ledit message de commande de nœud *CN* au module de tampon de données **(150)** ;
- ledit système de commande **(185)** comprend un module de gestion et de conflit **(160)** configuré pour transmettre ledit message de commande de nœud *CN* aux nœuds de réseau radio sélectionnés **(E2(i))** par l'intermédiaire du module de tampon de données **(150)** en commandant ledit module de tampon de données **(150)** sur la base desdites données de configuration *CD* ;
le module de gestion et de conflit **(160)** est configuré pour commander le module de tampon de données **(150)** de sorte que, lorsqu'au moins deux applications **(xAPP(j))** fournissent simultanément des messages de commande de nœud *CN* au module de tampon de données **(150),** les messages de commande de nœud *CN* sont effectivement transmis aux nœuds de réseau radio sélectionnés **(E2(i))** sur la base d'une comparaison des paramètres de priorité de tâches des tâches *TSK(k)* impliquant lesdites au moins deux applications **(xAPP(j)).**

2. Réseau de communication mobile **(100)** selon la revendication 1, dans lequel lesdites données de configuration *CD* comprennent en outre :
- pour chacune desdites tâches *TSK(k),* au moins l'un des éléments parmi :
- un paramètre de type de tâche indiquant un objectif de ladite tâche *TSK(k)* ;
- une liste d'applications énumérant les applications **(xAPP(j))** impliquées dans la réalisation de ladite tâche, et
- pour chacune desdites applications (**(xAPP(j))**, au moins l'un des éléments parmi :
- un paramètre d'identification d'application identifiant l'application ;
- un paramètre de politique d'application identifiant les politiques prises en charge par l'application ;
- un paramètre d'état d'application identifiant un état de l'application.

3. Réseau de communication mobile **(100)** selon la revendication 1 ou 2, dans lequel lesdites données de configuration *CD* comprennent en outre des données relatives à la configuration et à l'état de la plateforme de contrôleur **(120).**

4. Réseau de communication mobile **(100)** selon la revendication 3, dans lequel lesdites données de configuration *CD* comprennent au moins l'un des éléments parmi :
- un paramètre d'identification de plateforme de contrôleur identifiant la plateforme de contrôleur ;
- un paramètre d'état de plateforme de contrôleur identifiant un état de la plateforme de contrôleur.

5. Réseau de communication mobile **(100)** selon l'une quelconque des revendications précédentes, dans lequel ledit système de commande **(185)** comprend un module de gestionnaire **(155)** configuré pour :
- recevoir en provenance du module orchestrateur de gestionnaire de services **(110)** une demande *RQ* pour définir une politique pour le fonctionnement d'au moins une application **(xAPP(j))** participant à la réalisation d'une tâche *TSK(k),*
- fournir ladite demande *RQ* au module de tampon de données **(150),** et
- amener ladite demande *RQ* à être transmise à ladite au moins une application **(xAPP(j))** par l'intermédiaire du module de tampon de données **(150)** en commandant ledit module de tampon de données **(150)** sur la base desdites données de configuration *CD*.

6. Réseau de communication mobile **(100)** selon la revendication 5, lorsqu'elle dépend de la revendication 2, dans lequel ledit module de gestionnaire **(155)** est configuré pour transmettre ladite demande *RQ* à ladite au moins une application **(xAPP(j))** en commandant ledit module de tampon de données **(150)** sur la base d'au moins le paramètre de politique d'application correspondant à ladite au moins une application **(xAPP(j)).**

7. Réseau de communication mobile **(100)** selon l'une quelconque des revendications précédentes, dans lequel la plateforme de contrôleur **(120)** est configurée pour commander le module de tampon de données **(150)** afin de collecter, auprès des nœuds de réseau radio **(E2(i)),** des données d'informations *EI* concernant l'état des nœuds de réseau radio **(E2(i))** et de mettre lesdites données d'informations *EI* collectées à la disposition des applications **(xAPP(j))** qui sont actuellement en cours d'exécution.

8. Réseau de communication mobile selon l'une quelconque des revendications précédentes, dans lequel le module orchestrateur de gestionnaire de services **(110)** comprend un module orchestrateur **(140)** configuré pour mettre à jour/modifier lesdites données de configuration *CD* afin de reconfigurer la plateforme de contrôleur **(120).**

9. Réseau de communication mobile **(100)** selon l'une quelconque des revendications précédentes, dans lequel lesdites tâches *TSK(k)* comprennent au moins un élément parmi :
une tâche visant à surveiller des défaillances de réseau potentielles ;
une tâche visant à gérer une qualité d'expérience ;
une tâche visant à gérer une qualité de service ;
une tâche visant à gérer un équilibre de trafic de réseau ;
une tâche visant à gérer un brouillage de réseau.

10. Réseau de communication mobile **(100)** selon l'une quelconque des revendications précédentes, dans lequel ledit réseau de communication mobile est un réseau de communication mobile 4G ou 5G configuré pour mettre en œuvre des capacités de réseau auto-organisé.

11. Procédé de gestion d'un réseau de communication mobile **(100)** comprenant une pluralité de nœuds de réseau radio **(E2(i)),** comprenant le fait de ;
- gérer, par le biais d'un module orchestrateur de gestionnaire de services **(110)** du réseau de communication mobile **(100),** le service de réseau, l'exploitation et la configuration des nœuds de réseau radio **(E2(i))** en générant des demandes *RQ* demandant des politiques pour la gestion desdits nœuds de réseau radio **(E2(i))** en transmettant lesdites demandes *RQ*, générées par le module orchestrateur de gestionnaire de services **(110),** à une plateforme de contrôleur **(120)** exploitant une interface entre le module orchestrateur de gestionnaire de services **(110)** et la plateforme de contrôleur **(120)** ;
- gérer, par le biais de la plateforme de contrôleur **(120),** les nœuds de réseau radio **(E2(i)),** en commandant l'exécution des applications **(xAPP(j))** pour réaliser des tâches *TSK(k)* sur les nœuds de réseau radio **(E2(i))** selon des politiques demandées par le biais des demandes *RQ*, dans laquelle ladite gestion des nœuds de réseau radio comprenant le fait de :
- stocker, dans un module de base de données **(148)** de la plateforme de contrôleur **(120),** des données de configuration *CD* comprenant des données relatives à la configuration et à l'état desdites tâches *TSK(k)* et desdites applications **(xAPP(j)),**
**caractérisé en ce qu'**il comprend en outre le fait de :
- gérer, par l'intermédiaire d'un module de tampon de données **(150)** de la plateforme de contrôleur **(120)** :
- une communication de données entre les applications **(xAPP(j))** et les nœuds de réseau radio **(E2(i)),** et
- une communication des demandes *RQ* aux applications **(xAPP(j)),**
- gérer, par l'intermédiaire d'un système de commande **(185)** de la plateforme de contrôleur **(120),** le cycle de vie des applications **(xAPP(j))** en commandant la mise en mémoire tampon de données sur la base desdites données de configuration *CD*,
dans lequel :
- lesdites données de configuration *CD* comprennent, pour chacune desdites tâches *TSK(k),* un paramètre de priorité de tâche indiquant la priorité de ladite tâche *TSK(k),*
- chaque application **(xAPP(j))** générant un message de commande de nœud *CN* à transmettre à des nœuds de réseau radio sélectionnés **(E2(i))** afin de réaliser une tâche *TSK(k)* sur lesdits nœuds de réseau radio sélectionnés **(E2(i)),** chaque application fournissant ledit message de commande *CN* au module de tampon de données **(150)** ;
- ledit système de commande **(185)** comprend un module de gestion et de conflit **(160)** transmettant ledit message de commande de nœud *CN* aux nœuds de réseau radio sélectionnés **(E2(i))** par l'intermédiaire du module de tampon de données **(150)** en commandant ledit module de tampon de données **(150)** sur la base desdites données de configuration *CD*,
le module de gestion et de conflit **(160)** commandant le module de tampon de données **(150)** de sorte que, lorsqu'au moins deux applications **(xAPP(j))** fournissent simultanément des messages de commande de nœud *CN* au module de tampon de données **(150),** les messages de commande de nœud *CN* sont effectivement transmis aux nœuds de réseau radio sélectionnés **(E2(i))** sur la base d'une comparaison des paramètres de priorité de tâches *TSK(k)* impliquant lesdites au moins deux applications **(xAPP(j)).**
